# EUROPÄISCHE PATENTANMELDUNG

(11) **EP 1 038 810 A1**
(43) Veröffentlichungstag der Anmeldung: **27.09.2000**
(21) Anmeldenummer: 00250091.6
(22) Anmeldetag: 14.03.2000
(51) Int. Cl.: B65G 51/44, B65G 51/46

(54) **Verfahren zum asynchronen Transport stückiger Gegenstände in einem Transportsystem**

(30) Priorität: 17.03.1999 DE 19913062
(71) Anmelder: Prof. Dr.-Ing. Stein & Partner GmbH, 44799 Bochum (DE)
(72) Erfinder: Weller, Wolfgang, Prof. Dr.-Ing., 13156 Berlin (DE); Stein, Dietrich, Prof. Dr.-Ing., 44892 Bochum (DE)
(74) Vertreter: Pfenning, Meinig & Partner

(57) **Zusammenfassung**

Bei einem Verfahren zum asynchronen Transport stückiger Gegenstände auf vorgegebenen Wegen in einem Transportsystems zwischen wählbaren Stationen, die zum Weiterleiten oder Verzweigen der Gegenstände im Transportsystem und/oder Einkoppeln der Gegenstände in das Transportsystem und/oder Auskoppeln der Gegenstände aus dem Transportsystem dienen, enthalten die Stationen oder Gegenstände jeweils eine Steuervorrichtung. Um ein kollisionsfreie Einkopplung von Gegenständen in das Transportsystem zu erzielen, wird das Verkehrsgeschehen im Transportsystem durch einen virtuellen Verkehrsbeobachter nachgebildet, dessen jeweiliger Zustand ein dynamisches Abbild des vorliegenden Verkehrsgeschehens liefert. Anhand dieses Abbildes sind alle benötigten Steuerinformationen ableitbar, die eine kollisionsfreie Einkopplung von Gegenständen in den Güterstrom gewährleisten. Vorzugsweise ist hierzu in den Stationen der Abstand zwischen aufeinander folgend durch das Transportsystem geförderten Gegenständen ohne Veränderung von deren Transportgeschwindigkeit vergrößerbar. Vorteilhaft wird zur Vergrößerung des Abstandes zwischen zwei aufeinander folgenden Gegenständen der hintere Gegenstand über eine Bypass-artig von der Hauptstrecke (TN1) abgezweigte Verzögerungsstrecke (TN2) vorgegebener Länge geführt.

## Beschreibung

Die Erfindung betrifft ein Verfahren nach dem Oberbegriff des Anspruchs 1.

Aus der DE 3523554 A1 ist bekannt, bei Förderanlagen an den zu befördernden Gegenständen eine optisch lesbare Kodierung vorzusehen, die die notwendigen Informationen zum Steuern des Transports der Gegenstände enthält. Die Kodierungen werden an einer Weiche oder in einer Station gelesen und steuern die Weiche oder die Station entsprechend, um den Transportweg festzulegen oder einen Gegenstand in der Station aus dem Transportweg auszukoppeln, wenn diese in den gelesenen Informationen als Empfangsstation angegeben ist. Es wird hier jedoch nicht das Problem behandelt, wie eine kollisionsfreie Einkopplung zu befördernder Gegenstände in eine Reihe von in der Förderanlage aufeinanderfolgend transportierten Gegenständen durchgeführt werden kann.

Weiterhin wird in der DE 3701931 C2 ein System zum Transportieren von an Laufkatzen gehalterten Arbeitsstücken zu einer Vielzahl von Arbeitsstationen offenbart, bei dem ein die Arbeitsstation verbindendes Schienensystem vorgesehen ist, das eine Hauptschiene und mehrere Nebenschienen umfaßt, die mittels Weichen von der Hauptschiene schleifenartig abgezweigt sind. Im Bereich der Weichen an der Hauptschiene angeordnete Sensoren dienen zum Erfassen von maschinenlesbaren Codes, mit denen die Laufkatzen versehen sind. Da hier die Laufkatzen fest mit dem Schienensystem verbunden sind und nicht in dieses eingekoppelt bzw. aus diesem ausgekoppelt werden müssen, besteht hier das Problem der Erzielung einer kollisionsfreien Einkopplung zu befördernder Gegenstände in das Transportsystem nicht.

Es ist daher die Aufgabe der vorliegenden Erfindung, ein Verfahren zum asynchronen Transport stückiger Gegenstände auf vorgegebenen Wegen in einem Transportsystem zwischen wählbaren Stationen, die zum Weiterleiten oder Verzweigen der Gegenstände im Transportsystem und/oder Einkoppeln der Gegenstände in das Transportsystem und/oder Auskoppeln der Gegenstände aus dem Transportsystem dienen, wobei wahlweise entweder die Stationen oder die Gegenstände jeweils eine Steuervorrichtung enthalten, die mittels empfangener Informationen zumindest das Auskoppeln der Gegenstände in der zugeordneten Station steuern, anzugeben, durch welches erreicht werden kann, daß in das Transportsystem einzukoppelnde Gegenstände ohne Überschreitung einer vorgegebenen Wartezeit kollisionsfrei in eine Reihe mit von mit geringem gegenseitigem Abstand aufeinander folgend durch das Transportsystem geförderten Gegenständen eingefügt werden können, ohne daß die Transportgeschwindigkeit der geförderten Gegenstände verringert werden muß.

Diese Aufgabe wird erfindungsgemäß gelöst durch die im kennzeichnenden Teil des Anspruchs 1 angegebenen Merkmale. Vorteilhafte Weiterbildungen des erfindungsgemäßen Verfahrens ergeben sich aus den Unteransprüchen.

Gemäß der Erfindung wird zur Erzielung einer kollisionsfreien Einkopplung von Gegenständen in das Transportsystem das Verkehrsgeschehen im Transportsystem durch einen virtuellen Verkehrsbeobachter nachgebildet, dessen jeweiliger Zustand ein dynamisches Abbild des vorliegenden Verkehrsgeschehens liefert, wobei anhand dessen durch schrittweise Verarbeitung alle benötigten Steuerinformationen ableitbar sind, die eine automatisierte situationsgerechte Einkopplung absendebereiter Gegenstände in den Güterstrom kollisionsfrei und zum frühestmöglichen oder einem gewünschten Zeitpunkt gewährleisten.

Vorteilhaft ist mindestens in einem Teil der Stationen der Abstand zwischen aufeinanderfolgend durch das Transportsystem geförderten Gegenständen ohne Veränderung von deren Transportgeschwindigkeit vergrößerbar, wobei zweckmäßig zur Vergrößerung des Abstandes zwischen zwei aufeinander folgenden Gegenständen der hintere Gegenstand über eine Bypaß-artig von der Hauptstrecke abgezweigte Verzögerungsstrecke vorgegebener Länge geführt ist.

Da die Transportgeschwindigkeit der geförderten Gegenstände nicht verringert wird, treten keine Stockungen auf und die Gegenstände können in kürzester Zeit zu ihrer Zielstation befördert werden. Auch werden Energieverluste durch Abbremsen und Wiederbeschleunigen der Gegenstände vermieden. Die Verzögerungsstrecke sollte gegenüber der Hauptstrecke um ein solches Maß verlängert sein, daß hierdurch eine Lücke ausreichender Größe zwischen zwei aufeinander folgenden Gegenständen entsteht, um einen einzukoppelnden Gegensand problemlos einfügen zu können.

Sind mehrere Gegenstände nacheinander einzukoppeln, ohne daß die Reihe der aufeinander folgend transportierten Gegenstände entsprechende Lücken enthält, kann es zweckmäßig sein, einen oder mehrere Gegenstände mehrmals über die Verzögerungsstrecke zu führen, so daß eine Lücke entsprechender Größe für die Einkopplung mehrerer Gegenstände oder mehrere Lücken für die Einkopplung jeweils eines Gegenstandes gebildet werden. Eine andere Möglichkeit besteht darin, mehrere Verzögerungsstrecken vorzusehen, die gegebenenfalls hintereinander geschaltet werden können.

Die Erfindung wird im Folgenden anhand eines in den Figuren dargestellten Ausführungsbeispiels näher erläutert. Es zeigen:
- Fig. 1: eine schematische Darstellung eines ringförmigen Transportsystems,
- Fig. 2: eine schematische Darstellung der Vorrichtung zum Einkoppeln von Gegenständen in einer Station,
- Fig. 3: eine Prinzipdarstellung der Steuerung zur Einkopplung von Gegenständen in Verbindung mit der Möglichkeit der Bypass-Umlenkung,
- Fig. 4: eine Prinzipdarstellung der Steuerung der Auskopplung und Verzweigung von Gegenständen, und
- Fig. 5: einen fluidisch wirkenden Wegschalter im Transportsystem.

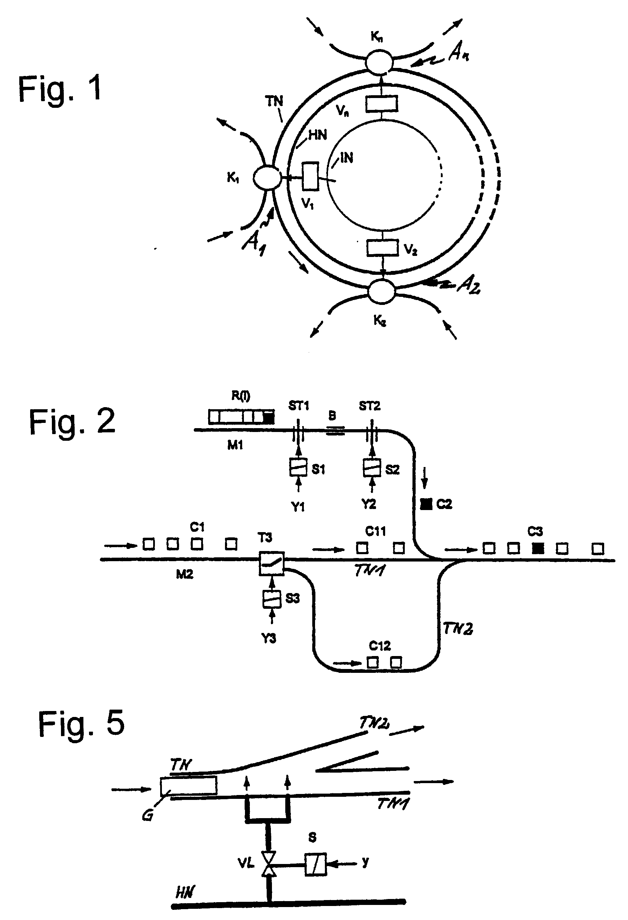

Fig. 1 gibt das Schema eines ringförmig ausgebildeten Transportnetzes wieder, in das in beliebiger Weise Stationen Aᵢ (A₁, A₂, ... Aₙ) eingebunden sind. Das aus einer ringförmigen Rohrleitung TN bestehende Transportnetz wird von einer ebenfalls ringförmigen Rohrleitung HN für den Transport von Hilfsenergie und einer ringförmigen, gegebenenfalls busartigen Informationsleitung IN zur Kommunikation zwischen den Stationen begleitet. Der Antrieb der Gegenstände in der Rohrleitung TN erfolgt unter Verwendung pneumatischer Energie, die an einer oder mehreren Stellen erzeugt und in die Rohrleitung TN eingespeist wird. Zwecks Energieeinsparung ist die Rohrleitung TN als geschlossenes System ausgeführt, so daß in den Leitungsknoten Kᵢ (K₁, K₂, ... Kₙ) der einzelnen Stationen eine Abdichtung der Ein- und Auskopplungsleitungen gegenüber der Umgebung mittels Schleusen erforderlich ist. Die Stationen enthalten jeweils den Leitungsknoten Kᵢ mit einer Vorrichtung zum Auskoppeln und einer Vorrichtung zum Einkoppeln der Gegenstände sowie eine Steuereinheit Vᵢ (V₁, V₂, ... Vₙ) mit einer Vermittlungsfunktion. In den Leitungsknoten Kᵢ erfolgt die anforderungsgemäße Ein- bzw. Auskopplung der Gegenstände unter Verwendung schaltbarer Drei-Tor-Glieder, die von der jeweiligen Steuereinheit Vᵢ auf der Grundlage einer Analyse von von den Gegenständen abgetasteten Sensordaten angesteuert werden. Die Steuereinheiten Vᵢ können über die angeschlossene Informationsleitung IN miteinander kommunizieren, so daß erforderlichenfalls auch über diese empfangene Informationen zur Steuerung der Leitungsknoten Kᵢ verwendet werde können.

Fig. 2 veranschaulicht das Prinzip der Einkopplung von Gegenständen in die Rohrleitung TN. Gegenstände, die zum Versand bestimmt sind, werden in ein Register R(l) mit der Länge l eingelagert. Besteht ein Beförderungswunsch für einen Gegenstand (im Register R(l) schwarz dargestellt), so wird ein Schleusentor ST1 durch ein Signal Y1 von der zugeordneten Steuereinheit Vᵢ an ein Stellglied S1 kurz geöffnet, während ein Schleusentor ST2 geschlossen gehalten wird. Der zu befördernde Gegenstand gelangt dadurch in ein 1-stelliges Register B. Nach Schließen des Schleusentores ST1 kann nun das Schleusentor ST2 geöffnet werden. Dies kann jedoch nur erfolgen, wenn eine ausreichende Lücke in der an der Einkopplungsstelle mit relativ hoher Geschwindigkeit vorbeilaufenden Reihe von Gegenständen in der Rohrleitung TN vorhanden ist, um ein kollisionsfreies Einkoppeln zu gewährleisten. Zu diesem Zweck ist eine Meßeinrichtung M2 vorgesehen, welche die Struktur der in die Einkopplungsvorrichtung einlaufenden Reihe von Gegenständen erfaßt. Diese wird in der Steuereinheit Vᵢ analysiert und in Abhängigkeit vom Ergebnis der Analyse wird ein Signal Y2 an ein Stellglied S2 zum Öffnen des Schleusentores ST2 gegeben.

Wenn die Wartezeit für den einzukoppelnden Gegenstand maximal der Dauer entsprechen soll, während der m Gegenstände in einen gegenseitigen Abstand, der geringer ist als der zum kollisionsfreien Einkoppeln eines Gegenstands erforderliche minimale Abstand, an der Einkopplungsstelle vorbeilaufen, dann bestehen drei Möglichkeiten für die Steuerung der Einkopplung:
a) Das Schleusentor ST2 kann unmittelbar nach Schließen des Schleusentores ST1 geöffnet werden, wenn zu diesem Zeitpunkt kein Gegenstand an der Einkopplungsstelle vorbeiläuft und der Abstand zwischen dieser und dem nächstfolgenden Gegenstand ausreichend groß für ein kollisionsfreies Einkoppeln ist.
b) Besteht zwischen zwei benachbarten der nächsten n+1 nachfolgenden Gegenstände in der Rohrleitung TN eine Lücke, die ausreichend groß ist, um ein kollisionsfreies Einkoppeln zu gestatten, dann wird das Schleusentor ST2 zeitlich so gesteuert, daß der einzukoppelnde Gegenstand in diese Lücke eingefügt werden kann.
c) Besteht zwischen zwei benachbarten der nächsten n+1 nachfolgenden Gegenstände in der Rohrleitung TN keine Lücke, die ausreichend groß ist, um ein kollisionsfreies Einkoppeln zu gestatten, dann muß nach dem n-ten Gegenstand eine derartige Lücke geschaffen werden. Hierbei soll jedoch die Geschwindigkeit der geförderten Gegenstände nicht verringert werden, um Stockungen zu vermeiden.

Aus diesem Grund zweigt von der Hauptstrecke TN1 der Rohrleitung TN, über welche die Gegenstände normalerweise geführt werden, Bypass-artig eine Verzögerungsstrecke TN2 ab, die sich von der Hauptstrecke TN1 durch eine größere Länge unterscheidet. Ein durch ein Signal Y3 von der Steuereinheit Vᵢ über ein Stellglied S3 gesteuertes, stromaufwärts der Einkopplungsstelle angeordnetes Umschalttor T3 können die Gegenstände entweder in die Hauptstrecke TN1 oder die Verzögerungsstrecke TN2 geleitet werden. Die Verzögerungsstrecke TN2 wird stromabwärts der Einkopplungsstelle wieder mit der Hauptstrecke TN1 zusammengeführt. Der Längenunterschied zwischen der Hauptstrecke TN1 und der Verzögerungsstrecke TN2 ist so bemessen, daß zwei unmittelbar aufeinanderfolgende Gegenstände, die vor dem Umschalttor T3 einen systembedingt minimalen Abstand aufweisen und von denen der vordere Gegenstand über die Hauptstrecke TN1 und der hintere Gegenstand über die Verzögerungsstrecke TN2 geleitet werden, stromabwärts der Zusammenführung dieser beiden Strecken einen solchen gegenseitigen Abstand haben, daß in die zwischen ihnen gebildete Lücke der einzukoppelnde Gegenstand kollisionsfrei eingefügt werden kann.

Im Beispiel nach Fig. 2 ist n = 2. Die Meßeinrichtung M2 hat eine Reihe C1 aus vier aufeinander folgenden Gegenständen festgestellt, bei denen der Abstand zwischen zwei benachbarten Gegenständen nicht so groß ist, daß der einzukoppelnde Gegenstand C2 in diese Reihe eingefügt werden kann. Der Gegenstand C2 hätte zum frühestmöglichen Zeitpunkt eingekoppelt werden können, wenn gerade der vorderste Gegenstand der Reihe C1 die Einkopplungsstelle passiert. Da jedoch keine ausreichende Lücke vorhanden ist, müßte er zumindest solange warten, bis der letzte Gegenstand der Reihe C1 die Einkopplungsstelle passiert hat. Da aber n = 2 ist, soll der Gegenstand C2 nach dem zweiten Gegenstand der Reihe C1 eingekoppelt werden. Dies wird dadurch erreicht, daß nur die ersten beiden Gegenstände der Reihe C1 als Teilreihe C11 zu der Hauptstrecke TN1 geleitet werden und das Umschalttor T3 dann umgeschaltet wird, so daß die beiden letzten Gegenstände der Reihe C1 als Teilreihe C12 zu der Verzögerungsstrecke TN2 gelangen. Obgleich die Geschwindigkeit der beiden Teilreihen C11 und C12 gleich ist, wird aufgrund des Längenunterschiedes zwischen der Hauptstrecke TN1 und der Verzögerungsstrecke TN2 ein solcher Abstand zwischen ihnen gebildet, daß der einzukoppelnde Gegenstand kollisionsfrei zwischen ihnen eingefügt werden kann. Die so gebildete Folge verläßt die Station als Reihe C3.

Die nachfolgenden Gegenstände müssen solange über die Verzögerungsstrecke TN2 geführt werden, bis eine ausreichende Lücke in der Folge der Gegenstände auftritt, damit der letzte Gegenstand vor der Lücke, der noch über die Verzögerungsstrecke TN2 läuft, und der erste Gegenstand nach der Lücke, wenn er über die Hauptstrecke TN1 läuft, hinter der Zusammenführung der beiden Strecken einander nicht behindern. Im Bereich dieser Lücke wird dann das Umschalttor T3 umgeschaltet, so daß die nachfolgenden Gegenstände zu der Hauptstrecke TN1 geleitet werden.

Es empfiehlt sich, mehrere Verzögerungsstrecken, die hintereinander geschaltet werden können, oder eine Verzögerungsstrecke, die so umschaltbar ist, daß sie mehrfach durchlaufen werden kann, vorzusehen, wenn die Gefahr besteht, daß kurzzeitig mehr nacheinander einzukoppelnde Gegenstände auftreten als Lücken mit ausreichender Länge in der gerade die Einkopplungsstelle passierenden Folge von Gegenständen vorhanden sind.

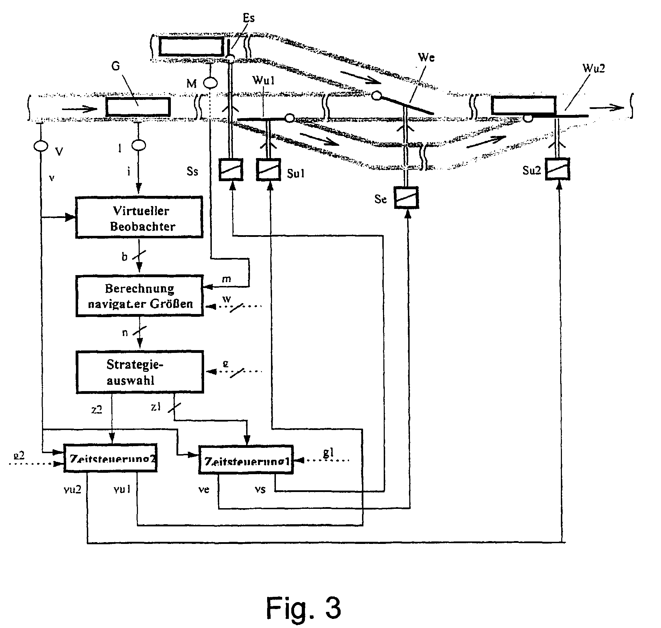

Fig. 3 veranschaulicht das Prinzip der Steuerung der Einkopplung von Gegenständen mit Bypass-Umlenkung am Beispiel einer stationsseitigen Realisierung der Steuereinrichtung. Kernstück dieser Lösung ist ein virtueller Verkehrsbeobachter. Dieser erzeugt anhand der zugeführten impulsförmigen Signale i, die beim Passieren eines Gegenstandes G von einem Impulsgeber I abgegeben werden, und unter Verarbeitung des mittels einer Sensorik V erfaßten Geschwindigkeitssignals v eine dynamische Abbildung des einer direkten Wahrnehmung unzugänglichen Stroms von transportierten Gegenständen innerhalb eines festgelegten Abschnitts des Transportweges. Der jeweilige Zustand des virtuellen Beobachters liefert ein mehrstelliges Beobachtungssignal b in einer von Computern weiter verarbeitbaren Form, das die momentane Verteilung der im beobachteten Leitungsabschnitt befindlichen Gegenstände repräsentiert. Wird von einem im Einkopplungsregister befindlichen Geber M durch ein entsprechendes Signal m gemeldet, daß sich ein Gegenstand in Sendeposition befindet, so wird die Funktionseinheit "Berechnung navigatorischer Größen" aktiviert. An Hand der übermittelten Beobachtungsdaten und bestimmter Weglängen w werden nun geeignete Navigationsdaten, wie beispielsweise Anzahl und/oder Position der Gegenstände im Transportabschnitt, Abstände zwischen benachbarten Gegenständen, Distanzen zu Wegmarken, berechnet und als Daten n an die Funktionseinheit "Strategieauswahl" übermittelt. Dort erfolgt unter Hinzuziehung weiterer festgelegter Längendaten l eine Analyse der Verkehrssituation im Hinblick auf die Auswahl der jeweils günstigsten Strategie. Die Alternativen betreffen die unverzögerte , begrenzt verzögerte und maximal verzögerte Einkopplung des sendebereiten Gegenstandes G, wobei im letztgenannten Fall die Umlenkung eines Teils des Transportstroms über die Bypaßstrecke vorgesehen wird. Die Entscheidungen der Strategieauswahl werden in Form der mehrstelligen Signale z1 bzw. z2 an die Funktionseinheiten "Zeitsteuerung1" und "Zeitsteuerung2" übermittelt. In diesen erfolgt unter Berücksichtigung des Geschwindigkeitssignals v und geeigneter geometrischer Daten g1 bzw. g2 die Berechnung und Realisierung der erforderlichen Verzugszeiten für das Öffnen und Schließen der beteiligten Stellglieder und Ausgabe der Stellsignale ys und yp bzw. yu1 und yu2. Über die Stellsignale ys und ye werden die Stellantriebe Ss und Se angesteuert, welche ein geeignetes Stellglied Ws für die Startfreigabe sowie die Einkopplungsweiche We betätigen. In gleicher Weise werden im Bedarfsfall über die Stellsignale yu1 und yu2 die Stellantriebe Su1 und Su2 und über diese die Umlenkweichen Wu1 und Wu2 der Bypaßstrecke geschaltet.

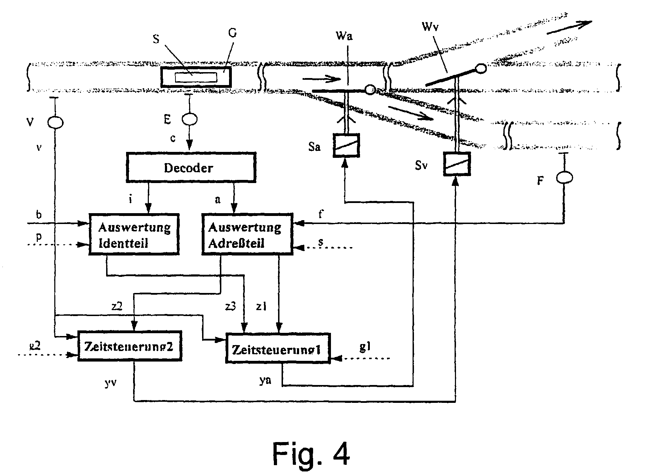

Fig. 4 zeigt die Struktur einer Steuerung zur Auskopplung und Verzweigung von Gegenständen G am Beispiel der stationären Realisierung dieser Steuereinrichtung in einer Station. Wesentlich für diese Manöver ist der Inhalt des von dem jeweiligen Gegenstand mitgeführten Speichermediums S. Dieser wird während der Vorbeibewegung des betreffenden Gegenstandes am Empfänger E auf diesen übertragen und anschließend in der Funktionseinheit "Decoder" entschlüsselt und als sog. Adreßteil a und Identteil i jeweils gesondert an die Funktionseinheiten "Auswertung Adreßteil" und "Auswertung Identteil" weiter geleitet. Die Aktivierung der Funktionseinheit "Auswertung Adreßteil" erfolgt durch das Freigabesignal f, das von einem im Auskopplungskanal geeignet positionierten Geber F ausgegeben wird um festzustellen, ob dieser aufnahmefähig ist. Durch Vergleich bestimmter Adreßteile a mit Teilen der spezifischen Stationsadresse s wird festgestellt, ob der zuströmende Gegenstand ausgekoppelt, verzweigt oder weitergeleitet werden soll. Im Fall der Auskopplung oder Verzweigung wird dies über die Signale z1 bzw. z2 den Funktionseinheiten "Zeitsteuerung 1" bzw. "Zeitsteuerung 2" mitgeteilt, Es ist weiterhin die Möglichkeit vorgesehen, in bestimmten Fällen Auskopplungsvorgänge auch von der Station aus zu veranlassen. Dies ist interessant, um den Bedarf an Kapseln bestimmten Inhalts (beispielsweise von Leerkapseln) in der Station zu decken. Besteht eine mittels des Signals b erfaßte Bedarfsmeldung, so erfolgt eine Aktivierung der Funktionseinheit "Auswertung Identteil". In dieser werden geeignete Teile der Identinformation mit gewissen Prüfmerkmalen p verglichen und als Ergebnis dieser Prüfung ein Signal z3 ausgesandt. Die Signale z1 und z3 werden der Funktionseinheit "Zeitsteuerung1" und das Signal z2 der "Zeitsteuerung2" zugeführt. In diesen Funktionseinheiten werden unter Verarbeitung gewisser Daten g1 bzw. g2 geometrischen Inhalts sowie des Signals v der aktuellen Geschwindigkeit die Verzugszeiten für die Stellgliedumschaltungen berechnet und in Form der Stellsignale ya bzw. yv realisiert. Hierbei wird das Signal ya dem Stellantrieb Sa zugeleitet, der die Auskopplungsweiche Wa betätigt. Entsprechend wird das Signal yv auf das Stellglied Sv zum Antrieb der Verzweigungsweiche Wv übertragen.

Fig. 5 zeigt schematisch ein fluidisch wirkendes 3-Tor-Glied, das in Fig. 2 als Umschalttor T3 verwendet wird. Wie ersichtlich ist, ist das 3-Tor-Glied asymmetrisch ausgeführt und besitzt kein mechanisches Stellglied. Die Wegumschaltung der durchlaufenden Gegenstände G basiert hier auf einem fluidischen Wirkprinzip, wobei prinzipiell eine druck- als auch eine sogwirksame Lösung benutzt werden kann. Fig. 5 zeigt die druckwirksame Variante. Wie dargestellt ist, wird die Rohrleitung TN für den Transport der Gegenstände G von einer parallel geführten Rohrleitung HN zur Übertragung von pneumatischer Hilfsenergie begleitet, welche einen Abzweig besitzt, der lateral in das 3-Tor-Glied mündet. Die Umlenkwirkung für die Gegenstände tritt dadurch ein, daß in der Rohrleitung TN infolge des beim Transport auftretenden Energieverlusts ein niedrigerer Druck als in der Rohrleitung HN herrscht, so daß bei Öffnung des Ventils VL mittels des Stellgliedes S eine laterale Kraft auf die vorbeilaufenden Gegenstände wirkt, die eine Umlenkung in die abzweigende Leitung (Verzögerungsstrecke TN2) zur Folge hat.

Das erfindungsgemäße Verfahren zum asynchronen Transport stückiger Gegenstände auf vorgegebenen Wegen in einem Transportsystem ist anwendbar auf alle Topologien von Transportnetzen, die im Sinne der Petri-Netz-Theorie sicher und lebendig sind.

## Patentansprüche

1. Verfahren zum asynchronen Transport stückiger Gegenstände auf vorgegebenen Wegen eines Transportsystems zwischen wählbaren Stationen, die zum Weiterleiten, Verzweigen und Einkoppeln der Gegenstände in das Transportsystem und/oder Auskoppeln der Gegenstände aus dem Transportsystem dienen, wobei wahlweise entweder die Stationen oder die Gegenstände eine Steuereinrichtung enthalten, die mittels empfangener Informationen zumindest das Auskoppeln der Gegenstände in der zugeordneten Station steuern,
**dadurch gekennzeichnet**,
daß zur Erzielung einer kollisionsfreien Einkopplung von Gegenständen in das Transportsystem das Verkehrsgeschehen im Transportsystem durch einen virtuellen Verkehrsbeobachter nachgebildet wird, dessen jeweiliger Zustand ein dynamisches Abbild des vorliegenden Verkehrsgeschehens liefert, wobei anhand dessen durch schrittweise Verarbeitung alle benötigten Steuerinformationen ableitbar sind, die eine automatisierte situationsgerechte Einkopplung absendebereiter Gegenstände in den Güterstrom kollisionsfrei und zum frühestmöglichen oder einem gewünschten Zeitpunkt gewährleisten.

2. Verfahren nach Anspruch 1, dadurch gekennzeichnet, daß die kollisionsfreie Einkopplung von Gegenständen in den Güterstrom weitgehend unabhängig von dessen Geschwindigkeit erfolgt, d.h. die betreffende Steuerung sich adaptiert.

3. Verfahren nach Anspruch 1, dadurch gekennzeichnet, daß mindestens in einem Teil der Stationen der Abstand zwischen aufeinanderfolgend durch das Transportsystem geförderten Gegenständen ohne Veränderung von deren Transportgeschwindigkeit vergrößerbar ist.

4. Verfahren nach Anspruch 3, dadurch gekennzeichnet, daß zur Vergrößerung des Abstandes zwischen zwei aufeinander folgenden Gegenständen der hintere Gegenstand über eine Bypaß-artig von der Hauptstrecke abgezweigte Verzögerungsstrecke vorgegebener Länge geführt ist.

5. Verfahren nach Anspruch 4, dadurch gekennzeichnet, daß der hintere Gegenstand ein- oder mehrmals über eine Verzögerungsstrecke geführt wird.

6. Verfahren nach Anspruch 4, dadurch gekennzeichnet, daß der hintere Gegenstand über mehrere hintereinander geschaltete Verzögerungsstrecken geführt wird.

7. Verfahren nach einem der Ansprüche 4 bis 6, dadurch gekennzeichnet, daß die dem ersten über die Verzögerungsstrecke geführten Gegenstand folgenden Gegenstände, wenn ihr gegenseitiger Abstand einen vorgegeben Mindestabstand unterschreitet, ebenfalls über die Verzögerungsstrecke geführt werden.

8. Verfahren nach einem der Ansprüche 4 bis 7, dadurch gekennzeichnet, daß der Transportweg in der Station in Abhängigkeit von einem die beabsichtigte Einkopplung eines Gegenstandes anzeigenden Signal und einem die Abstände zwischen im Transportsystem geförderten, aufeinander folgend in der Station eintreffenden Gegenständen anzeigenden Signal von der Hauptstrecke auf die Verzögerungsstrecke umgeschaltet wird.

9. Verfahren nach einem der Ansprüche 1 bis 8, dadurch gekennzeichnet, daß der Abstand zwischen aufeinander folgend geförderten Gegenständen erst nach einer vorgegebenen Wartezeit des einzukoppelnden Gegenstandes vergrößert wird, sofern innerhalb der Wartezeit keine ausreichende Lücke für ein kollisionsfreies Einkoppeln des Gegenstandes zwischen zwei aufeinander folgend geförderten Gegenständen an der Einkopplungsstelle aufgetreten ist.

10. Verfahren nach Anspruch 1, dadurch gekennzeichnet, daß alle Gegenstände ein Speichermedium mit sich führen, auf dem sowohl Adreß- als auch andere, beispielsweise die Gegenstände, selbst betreffende Informationen hinterlegt sind, die entweder beim Passieren einer Station auf diese übertragen und ihrer Steuervorrichtung zugeleitet oder unmittelbar von der bordeigenenen Steuervorrichtung der Gegenstände zur Betätigung der jeweils dort vorhandenen Stelleinrichtungen zwecks Auskopplung von Gegenständen aus dem passierenden Güterstrom genutzt werden.

11. Verfahren nach einem der Ansprüche 1 bis 10, dadurch gekennzeichnet, daß die Steuervorrichtungen der Stationen durch ein Kommunikationsnetz miteinander verbunden sind, um Steuerdaten zwischen diesen zu übertragen.

12. Verfahren nach einem der Ansprüche 1 bis 10, dadurch gekennzeichnet, daß bei Verwendung pneumatischer Energie zum Antrieb der Gegenstände als Transportsystem ein geschlossenes, gegenüber der Umgebung durch Schleusen abgedichtetes Rohrleitungsnetz verwendet wird.

13. Verfahren nach Anspruch 12, dadurch gekennzeichnet, daß zum Umleiten der Gegenstände Umschalttore mit fluidischem Wirkprinzip verwendet werden.
